# EUROPEAN PATENT SPECIFICATION

(11) **EP 1 340 658 B1**
(45) Date of publication and mention of the grant of the patent: **29.11.2006**
(21) Application number: 03251229.5
(22) Date of filing: 28.02.2003
(51) Int. Cl.: B60R 25/00

(54) **Wheel clamp**
Klammer zum Blockieren eines Rades
Dispositif de blocage de roue

(30) Priority: 01.03.2002 GB 0204844
(43) Date of publication of application: 03.09.2003
(73) Proprietor: SAS Manufacturing Limited, Membury, Berkshire RG17 7TJ (GB)
(72) Inventor: Jones, Christopher, Swindon SN2 2NY (GB); Sworder, Malcolm Alan, Swindon SN4 9VT (GB)
(74) Representative: Gee, Steven William

(56) References cited:
- GB-A- 2 124 566
- GB-A- 2 273 084
- GB-A- 2 279 632
- US-A- 4 854 144
- US-A- 5 333 477
- US-A- 5 706 682

## Description

### FIELD OF THE INVENTION

This invention relates to a wheel clamp, specifically a clamp which can be used to embrace part of a wheel (typically a vehicle road wheel), and impede the rotation of that wheel.

### BACKGROUND TO THE INVENTION

Wheel clamps are in widespread use by local authorities, for example. They are used to prevent the unauthorised movement of vehicles. For example, the vehicle may be illegally parked and the owner may be required to pay a fine before the clamp is removed.

Alternatively, a vehicle owner may use a wheel clamp to reduce the likelihood of the vehicle being stolen if it is in an insecure location accessible to potential thieves.

### DESCRIPTION OF THE PRIOR ART

Many different designs of wheel clamp are known, but most incorporate three arms which can lie against respective parts of the wheel. Typically, one of the arms is substantially vertical and projects upwardly from the clamp body in use, and is referred to herein as the "top arm"; the other two arms project from opposed sides of the clamp body and lie at an angle below the horizontal, and are referred to herein as the "bottom arms". The top and bottom arms each include a radial portion and an axial portion ("radial" and "axial" being considered relative to the axis of rotation of the wheel), the axial portions engaging the tread of the tyre when in use. At least one (and often all) of the arms is of U-shape, and so has a "return radial" portion which can pass around the rear of the wheel and prevent the removal of the clamp in an axial direction.

At least one of the arms, usually the top arm, is removable from the clamp body to permit the bottom arms and remainder of the wheel clamp to be fitted to a vehicle wheel. When so fitted the removable arm is replaced and locked to the clamp body. The arms can therefore all be secured against respective parts of the wheel, and are intended to prevent the unauthorised removal of the clamp without the top arm being unlocked.

It is understood that the arm portions of the prior art devices, and also of the present invention, need not be precisely radial and axial respectively, though this is generally preferred.

Typically, at least one of the bottom arms will include an extension piece which projects a significant distance beyond the periphery of the wheel, the extension piece being adapted to engage the ground and/or a part of the vehicle if the wheel is rotated with the clamp in place.

One known design of wheel clamp, sold by the company Milenco Ltd., of 13 Aston Drive, Bradwell Abbey, Milton Keynes, MK13 9HA, UK, is of fixed size, i.e. it is adapted to be fitted to a wheel having a particular diameter and width. This design is suitable if the vehicle for which the clamp will be used is known in advance, such as a sales outlet where a number of vehicles (e.g. caravans) having similar-sized wheels may be stored in the open. However, it is not suitable if the vehicle is not known in advance, such as is usually the case for local authorities intending to prevent the movement of illegally parked vehicles.

In the Milenco design, all of the arms include a return radial portion, and the bottom arms are permanently secured to the body of the clamp. To fit the wheel clamp it is therefore necessary either to lift the wheel (and therefore the vehicle) so that the bottom arms can be passed thereunder, or to roll the vehicle so that its wheel passes over one of the bottom arms to lie between the bottom arms. This wheel clamp is therefore designed to prevent the theft of vehicles such as caravans or cars which might be accessible to thieves, but which can be moved as necessary to position the wheel clamp upon the wheel; the wheel clamp is not suitable for use by local authories or the like seeking to prevent the movement of illegally parked vehicles.

When the bottom arms are in place adjacent the wheel, the top arm is placed over the wheel and inserted into the body of the clamp, where it can be locked in place. The top arm slides in a channel of the clamp body, and so its orientation relative to the body is fixed. Also, the orientation of the bottom arms is fixed by their securement to the body, and so the relative angles between all of the arms are fixed. This wheel clamp can therefore maintain the arms at a relative angle of substantially 120°, which is the desired angle for a clamp having three arms.

By spacing the arms 120° apart, the spacing between the radial portions of the arms is equalised and minimised, and the likelihood of the vehicle wheel being removed from the clamp without the top arm being unlocked is reduced or eliminated.

The Milenco design is not suitable for applications in which the wheel clamp may be fitted to a range of different wheel sizes, and for such applications the clamp must be adjustable. Specifically, it is necessary that the length of the arms (i.e. the radial dimension) is adjustable to accomodate different wheel diameters, and that the axial dimension of the arm or arms having a return radial portion can be varied to suit different width wheels.

An adjustable wheel clamp is sold under the trade name "The New Defender" by SAS Security Products Ltd, of Chestnut House, Chesney Hill, Wick, Near Bristol, BS30 5NE, UK. In this design, the top arm has a number of positions in which it can be locked to the clamp body, and each of the bottom arms is adjustable in length. The adjustment is made possible by the radial portion of the bottom arms being formed as a bar and sleeve assembly, the bar being slidable within the sleeve, and securable thereto at a number of predetermined positions. The securement of the bar to the sleeve at one of the predetermined positions determines the length of the radial portion of each of the bottom arms, and therefore the diameter of the wheel for which the clamp is suitable.

In this design also, each of the arms includes a return radial portion. Because of this, it is necessary that the axial portion of each arm be adjustable in length, to accommodate wheels of different width. This adjustment is made possible by the axial portion of each arm being formed as a bar and sleeve assembly, the bar being slidable within the sleeve, and securable thereto at a number of predetermined positions. The securement of the bar to the sleeve at one of the predetermined positions determines the length of the axial portion of the arm, and therefore the width of the wheel for which the clamp is suitable.

It is arranged that the means securing the respective bar and sleeve assemblies in their chosen positions is inaccessible when the wheel clamp is in use, to prevent the unauthorised disassembly of the wheel clamp.

It is a particular disadvantage of the SAS design of wheel clamp that the angular relationship between the arms is not fixed. Thus, whilst the orientation of the top arm is fixed relative to the clamp body (by virtue of it sliding within a channel thereof), the bottom arms are pivotable relative to the clamp body, and so can assume a broad range of angles relative to one another (and also to the top arm). This flexibility is understood to be necessary to permit the wheel clamp to be positioned upon a wheel, since as above indicated the bottom arms have return radial portions, and some manipulation of the arms is required to place the clamp upon a stationary wheel. However, this flexibility is a positive disadvantage in that it permits the wheel clamp to be overcome either by applying sufficient force to separate the arms from the wheel, or more simply by deflating the tyre of the wheel so as to reduce its rolling radius, and allow the removal of the clamp from the wheel.

Thus, if the angular relationship between adjacent arms can be changed, then the separation between two of the adjacent axial portions can be increased, permitting the wheel to be passed between those parts and released from the clamp.

UK Patent Application 2,273,084 discloses a wheel clamp having three arms, each arm being adjustable radially and laterally. The bottom arms are mounted at a fixed relative orientation of between 90° and 120° and the top arm is slidable relative to a guide channel.

US Patent 5,706,682 discloses a wheel clamp having three arms, each arm being adjustable radially and laterally. The bottom arms are mounted at a fixed relative orientation by a central housing which also defines a guide channel for the top arm.

US Patent 5,333,477, upon which the preamble of claim 1 is based, discloses a wheel clamp having three arms in which only one of the arms is adjustable. The other two arms can pivot to a limited degree during fitment, pivoting being prevented by a bracket in the operational condition of the clamp.

UK Patent Application 2,124,566 discloses a wheel clamp having three arms, each arm being adjustable radially and laterally. The clamp body has a number of blocks which engage the arms and serve to maintain the angular separation of the arms at 120°.

### SUMMARY OF THE INVENTION

It is an object of the present invention to provide a wheel clamp which is adjustable, and yet which avoids or reduces the problems associated with prior art adjustable wheel clamps. Specifically, the invention seeks to provide a wheel clamp which is adjustable and yet in which the angular relationship between the arms is substantially fixed.

According to the invention therefore, there is provided a wheel clamp having three arms, each of the arms including a radial part and an axial part, at least one of the arms including a return radial part, two of the arms being pivotably mounted upon a clamp body and having an adjustable radial part, the other of the arms being securable to the clamp body in a number of predetermined positions, in which holding means are provided for maintaining the relative angular orientation of said two of the arms at a predetermined relative angle by substantially preventing pivoting movement of said two of the arms, the holding means being movable relative to the clamp body between operational and non-operational conditions, characterised in that when the holding means is in its non-operational position the arms can be pivoted to a relative angle larger than the predetermined relative angle.

Preferably, said other of the arms is slidably mounted to the clamp body. Preferably also the slidable mounting is by way of a channel section carried by the clamp body. Desirably, a lock member is mounted adjacent to the channel member for locking of the arm thereto.

Desirably, said two of the arms are maintained at an angle of substantially 120° relative to one another, and relative to said other of the arms. It will be understood that it is not necessary to maintain the arms at precisely 120° to one another (or at another angle if another angle should be chosen), and that some small angular flexibility is likely in practice due to manufacturing tolerances. However, small angular movements will not increase the separation between the axial portions significantly, and so the benefit of the present invention will be maintained.

Preferably, the holding means are wall members which are engageable with the respective arms substantially to prevent pivoting of the arms relative to the clamp body. Desirably, the wall members are not permanently engageable with the arms, i.e. the clamp can have a non-operational condition in which the arms can pivot relative to the clamp body, (so as to facilitate the mounting of the arms upon a stationary wheel, for example).

Preferably, the wall member(s) are carried by the other of the arms. In this way, the wall members can be brought into a position in which they can engage said two of the arms, and so prevent substantial movement thereof, when the other arm is brought into position, and the clamp is placed in its operational condition. The clamp can subsequently be locked or otherwise secured in its operational condition.

Desirably, the clamp body carries two of the arms, and those arms are preferably pivotable relative to the clamp body when the clamp is not in its operational condition. The clamp body also preferably includes the lock housing by way of which the other arm may be secured to the clamp body.

Preferably, the other of the arms carries the wall members. Desirably, the wall members can comprise an edge of a cover plate carried by the other of the arms.

Preferably, the cover plate (in conjunction with the clamp body) is adapted to obscure a significant part of the wheel. This reduces the likelihood that the wheel can be accessed when the clamp is locked thereto, which access might be used in an attempt to deflate or remove the wheel from from the vehicle, as might allow the vehicle subsequently to be moved.

Desirably, all of the arms have a return radial part. In some less desirable embodiments, however, only one of the arms (typically the other of the arms) has a return radial part.

Desirably, the adjustability of the radial portion of said two of the arms is provided by a number of spaced holes in the radial portion of each arm, and securement means to fix the arm to the clamp body by way a chosen one of the spaced holes. The securement means must be obscured from view, or at least be substantially inaccessible, when the clamp is fitted to a wheel, to prevent unauthorised disassembly of the clamp.

Desirably, the adjustability of the other of the arms is provided by the arm being securable to the clamp body in a number of spaced positions. Desirably also, the cover plate can be secured to the other of the arms in a number of spaced positions.

The number and spacing of the spaced positions in which the cover plate can be mounted to the arm desirably matches the number and spacing of the spaced positions in which the arm can be locked to the clamp body. This ensures that when the arm is locked to the clamp body the cover plate can assume the same position relative to the clamp body, and so in particular the wall members will be in the same position relative to the arms.

### BRIEF DESCRIPTION OF THE DRAWINGS

The invention will now be described, by way of example, with reference to the accompanying drawings, in which:
- Fig. 1: is a front view of the wheel clamp in its operational condition;
- Fig.2: is a rear view of the wheel clamp in its operational condition;
- Fig.3: is a view as Fig. 1, but with some of the hidden components shown in dotted lines;
- Fig.4: is a side view of the wheel clamp in its operational condition;
- Fig.5: is a front view of the cover plate of the clamp, with the hidden components shown in dotted outline;
- Fig.6: is a side view of the cover plate;
- Fig.7: is a side view of part of the top arm of the clamp;
- Fig.8: is a plan view of the radial portion of the top arm;
- Fig.9: is a plan view of part of the axial portion of the top arm;
- Fig. 10: is a front view of the clamp body;
- Fig. 11: is a side view of the clamp body;
- Fig.12: is a side view of a pivot peg of the clamp body;
- Fig. 13: is a side view of part of a bottom arm of the clamp;
- Fig. 14: is a plan view of the radial portion of a bottom arm;
- Fig. 15: is a plan view of part of the axial portion of a bottom arm;
- Fig. 16: is a side view of the remainder of the top arm and each of the bottom arms; and
- Fig.17: is a plan view of the remainder of the arms.

### DESCRIPTION OF THE EXEMPLARY EMBODIMENTS

The wheel clamp 10 comprises a clamp body 12 to which two (bottom) arms 14, 16 are attached. Another (top) arm 20 is securable to the clamp body by way of a lock (not shown) located in lock housing 22.

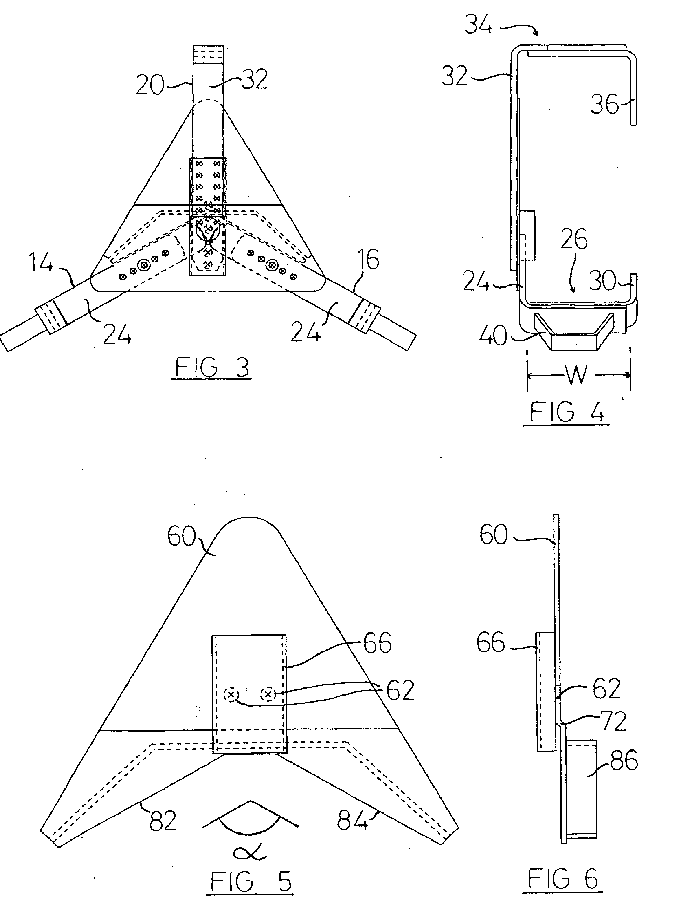

As better seen in Fig.4, the arms 14, 16, each have a radial portion 24, an axial portion 26 and a return radial portion 30. The top arm includes a radial portion 32, an axial portion 34 and a return radial portion 36. It will be understood that in use the radial portions 24, 32 will lie against the outside of the wheel, the axial portions 26, 34 will lie against the periphery of the wheel (and specifically against the tread of the tyre of the wheel), and the return radial portions 30, 36 will overlie respective parts of the inside of the wheel (and specifically will overlie respective parts of the inside surface of the tyre).

Each of the bottom arms 14, 16 carry a respective extension piece 40, which projects from the axial portion of the respective arm. The extension piece is designed to engage a part of the bodywork of the vehicle in the event that the wheel is rotated with the wheel clamp in place.

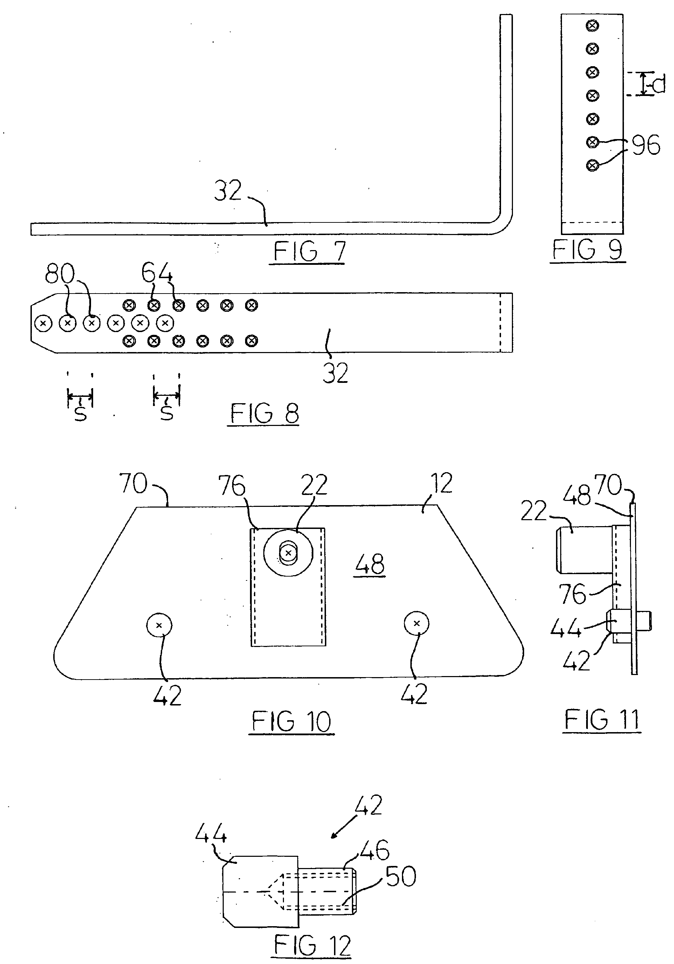

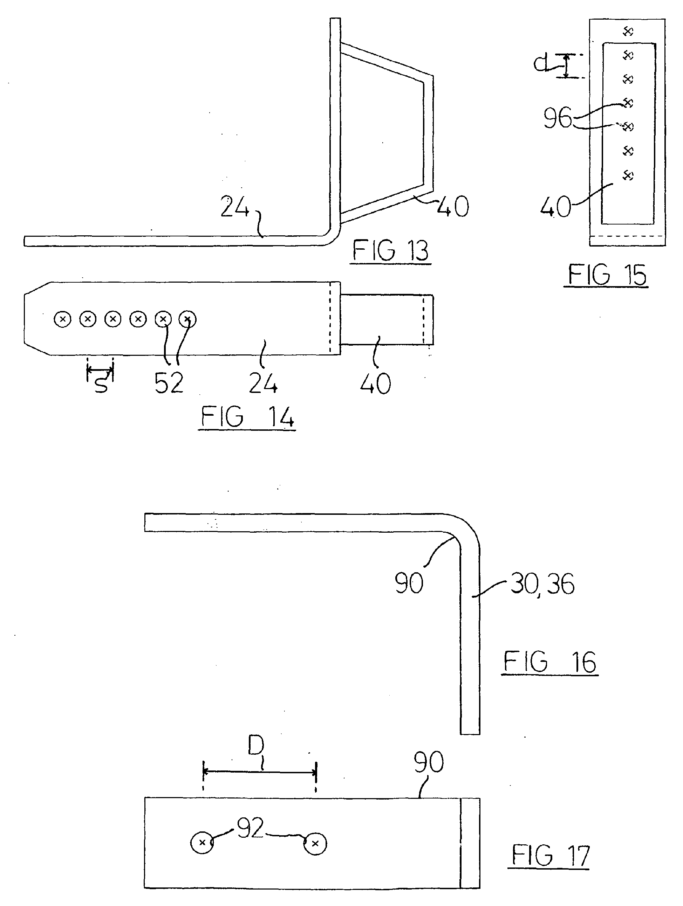

The bottom arms 14,16 are mounted to the clamp body 12 by way of respective pivot pegs 42 (see also Figs.11 and 12). Each pivot peg 42 comprises a boss 44 and a shaft 46, the shaft 46 occupying a hole in the plate 48 which forms a part of the clamp body 12. The shaft 46 has a counter-bore 50 formed therein, which counter-bore is threaded. As shown in Fig. 14, the radial portion 24 of each arm 14, 16 has a number of spaced holes 52 formed therein, which holes are sized to be a sliding fit over the shaft 46 of the pivot peg 42. The length of the shaft 46 which projects from the plate 48 is slightly greater than the thickness of the radial portion 24 of the arm 14, 16, so that when a bolt is located within the threaded counter-bore 50 it can secure the arm 14, 16 to the clamp body 12 but allow relative pivoting thereof.

The ability of the arms 14, 16 to pivot relative to the clamp body is very desirable in practice, particularly for embodiments in which the bottom arms 14,16 have respective return radial portions. Thus, when it is desired to fit the wheel clamp 10 to a vehicle wheel the top arm 20 is removed, and the bottom arms 14,16 must be fitted to the wheel with the return radial portions passing behind the wheel. This is most easily achieved if the arms 14, 16 are pivoted until they are substantially aligned (to maximise the separation of their respective axial portions), and moved alongside the bottom of the wheel, with the clamp body 12 close to the ground. When the return radial portions have passed behind the wheel the clamp body 12 can be lifted, whereupon the axial portions 26 of the arms 14, 16 will engage the tread of the tyre and the arms 14, 16 will move out of alignment.

The top arm 20 is secured to a cover plate 60 (see also Figs. 5 and 6) by way of screws or bolts passing through the holes 62 in the cover plate 60 and into two of the series of spaced threaded mounting holes 64 (Fig.8) in the radial portion 32 of the arm 20. The cover plate 60 carries a channel section 66 through which the radial portion 32 passes, and which channel section obscures the screws or bolts and so reduces the likelihood that these can be removed by drilling or the like.

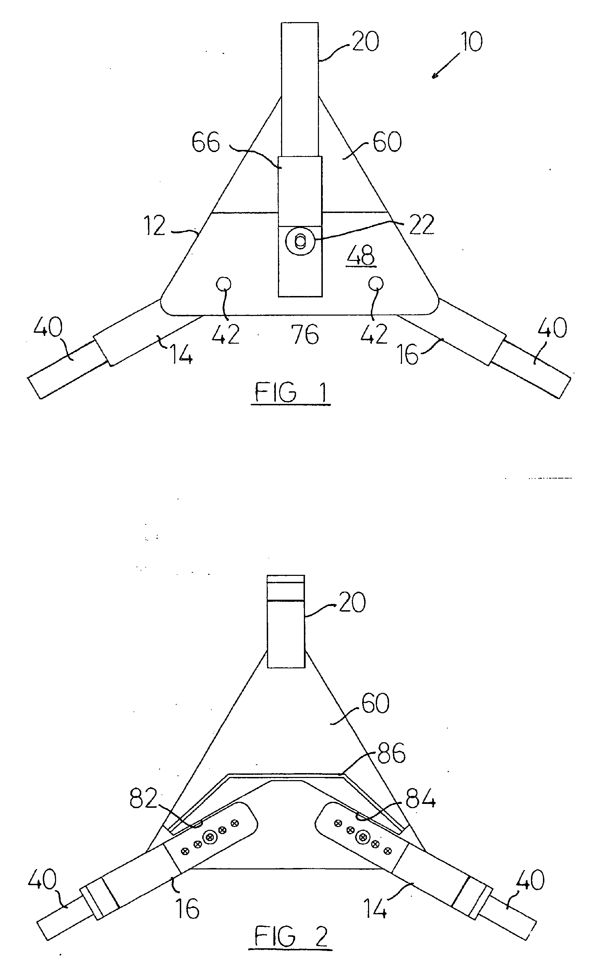

In the operative condition of the wheel clamp as shown in Figs. 1-3, the top arm 20 and cover plate 60 have been moved (together) to lie adjacent the clamp body 12. In particular, the top edge 70 (Fig. 11) of the clamp body 12 lies against (or at least very close to) the step 72 (Fig.6) in the cover plate 60. In this condition the channel section 66 which is carried by the cover plate 12 lies close to a similar channel section 76 (see also Figs. 10 and 11) of the clamp body 12. The radial portion 32 of the top arm 20 passes into the channel section 76, and the row of lock apertures 80 (Fig.8) pass beneath the lock housing 22. A conventional lock (not shown) can be located within the lock housing 22 and carry a movable projection which, when the lock is activated, can locate within a chosen one of the lock apertures 80, preventing separation of the top arm 20 (and hence also the cover plate 60) from the clamp body 12.

As shown in Fig.5, the bottom edge of the cover plate 60 is not flat, but includes two wall members 82, 84. The angle α between these wall members is in this embodiment 120° (in other embodiments the angle α may be other than 120°, but it is preferred that the angle α is equal to or at least very close to 120°, for the reasons explained above.

As seen in the rear view of Fig.2, in the operative (assembled) condition the wall members 82, 84 lie adjacent the radial portions 24 of the respective arm members 16, 14. The clamp member is drawn to show a relatively large gap between the wall members 82, 84 and the respective arm 14, 16 for reasons of clarity, but in practice that gap would be very small, or the respective parts would be touching. It will be understood that pivoting of the arm 14 either clockwise or anti-clockwise from the position shown will result in the arm engaging a part of the wall member 84, so that the pivoting of the arm members is limited and the arms 14, 16 are always retained at a relative angle of very close to the angle α. It will also be understood that the top arm 20, and its sliding relationship with the channel section 76 (and also the relationship of the top edge 70 of the clamp body 12 with the step 72) maintain the angular relationship between the clamp body 12 and the top arm 20, so that the angular relationship between all of the arms 14, 16, 20 can be maintained.

It will be seen from Figs. 2 and 6 that the cover plate 60 also carries a strengthening plate 86, which serves to reduce or eliminate the possibility of the cover plate 60 being bent or deformed by a person intent on disabling the fitted clamp.

It will be seen from Fig.8 that the spacing s between adjacent mounting holes 64 matches the spacing s between adjacent lock apertures 80. This is necessary so that in the operative condition of the clamp the respective channel sections 66 and 76, can lie as close to each other as desired, and that the distance between the top edge 70 of the clamp body 12 and the step 72 can remain consistent, for any adjustment position of the top arm 20.

It will be understood from Fig.8 that six adjustment positions are available for the bolts or screws securing the top arm 20 to the cover plate 60. This gives six possible effective lengths for the radial portion of the top arm 20. The spacing s in this embodiment is 20 mm, and this sets the separation between adjacent adjustment positions. The spacing s could be smaller or larger as desired, but 20 mm is believed to be an appropriate separation between adjacent adjustment positions. Also, in other embodiments more or fewer than six adjustment positions may be provided, as desired or required.

As seen in Fig. 14, there are also six adjustment positions for the bottom arms 14, 16, and these positions are also spaced by the distance s. Since the wheel to which the clamp is fitted is circular, it is of course necessary that the locations of the adjustment apertures 52, 80 for each arm be at (approximately) corresponding radial positions.

As shown in Fig.4, the axial portion 26, 34 of each arm is made up of two parts, the first part comprising an angled continuation of the radial portion, the second part comprising one side of an "L-shaped" arm piece 90 (Figs. 16 and 17). The provision of two parts for the axial portion allows adjustment of the axial portion, specifically an adjustment of the dimension W shown in Fig.4, comprising the separation between the radial portion 24 of an arm 14, 16 and the return radial portion 30 of that arm. It will be understood that adjustment of the dimension W allows the clamp to fit wheels of differing widths.

As shown in Fig.17, each L-piece includes two apertures 92. As shown in Figs.9 and 15, the remainder of the axial portion 26, 34 of the arms includes a row of seven threaded apertures 96 (the apertures in the remainder of the axial portion 26 of the arms 14, 16 are blind). Screws or bolts can be passed through the apertures 92 and into the apertures 96 to secure the L-piece to the remainder of the arm. The distance D between the apertures 92 is an exact multiple of the distance d between the apertures 96 (in this embodiment D = 2d). This arrangement provides five adjustment positions for the axial portions of the arms, though in other emboments more or fewer adjustment positions are possible. The distance d can be the same as the spacing s if desired, so that adjustment in the radial and axial portions can take place in similar increments, but this need not be so.

## Claims

1. Wheel clamp (10) having three arms (14, 16, 20), each of the arms including a radial part (24, 32) and an axial part (26, 34), at least one of the arms including a return radial part (30, 36), two of the arms (14, 16) being pivotably mounted upon a clamp body (12) and having an adjustable radial part (24), the other of the arms (20) being securable to the clamp body in a number of predetermined positions, in which holding means (82, 84) are provided for maintaining the relative angular orientation of said two of the arms (14, 16) at a predetermined relative angle (α) by substantially preventing pivoting movement of said two of the arms, the holding means being movable relative to the clamp body between operational and non-operational conditions, **characterised in that** when the holding means is in its non-operational position the arms can be pivoted to a relative angle larger than the predetermined relative angle (α).

2. Wheel clamp according to claim 1 in which the holding means is separable from the clamp body.

3. Wheel clamp according to claim 1 or claim 2 in which the holding means is at least one wall member (82, 84).

4. Wheel clamp according to claim 3 in which said at least one wall member (82, 84) is connected to the other of the arms (20).

5. Wheel clamp according to claim 3 or claim 4 in which said at least one wall member (82, 84) comprises an edge of a cover plate (60) connected to the other of the arms (20).

6. Wheel clamp according to claim 5 in which the cover plate (60) and clamp body (12) are together adapted to obscure a significant part of a wheel to which the wheel clamp (10) is fitted.

7. Wheel clamp according to claim 5 or claim 6 in which said cover plate (60) has a first portion which lies behind a part of the clamp body (12) in the assembled wheel clamp, and a second portion which does not lie behind a part of the clamp body in the assembled wheel clamp, said at least one wall member (82, 84) being an edge of said first portion of the cover plate.

8. Wheel clamp according to any one of claims 3-7 in which said at least one wall member has two surfaces (82, 84) set at the predetermined relative angle (α).

9. Wheel clamp according to any one of claims 5-7 in which the cover plate (60) can be connected to the other of the arms (20) in a number of spaced positions.

10. Wheel clamp according to any one of claims 1-9 in which said other of the arms is slidably mountable to the clamp body by way of a channel section carried by the clamp body.

## Patentansprüche

1. Radkralle (10) mit drei Armen (14, 16, 20), wobei jeder der Arme ein Radialteil (24, 32) und ein Axialteil (26, 34) einschließt, wobei zumindest einer der Arme ein Umkehr-Radialteil (30, 36) einschließt, zwei der Arme (14, 16) auf dem Krallenkörper (12) drehbar angebracht sind und ein verstellbares Radialteil (24) besitzen, wobei der andere Arm (20) an dem Krallenkörper in einer Anzahl an vorher bestimmten Positionen gesichert werden kann, an dem Haltemittel (82, 84) vorgesehen sind, zur Aufrechterhaltung der relativen Winkelausrichtung der besagten zwei Arme (14, 16) in einem vorher bestimmten relativen Winkel (α), indem im Wesentlichen die Drehbewegung der besagten zwei Arme verhindert wird, wobei die Haltemittel im Verhältnis zu dem Krallenkörper beweglich sind, zwischen betriebsbereiten und nicht-betriebsbereiten Bedingungen, **dadurch gekennzeichnet, dass** wenn sich das Haltemittel in einer nicht-betriebsbereiten Position befindet, die Arme zu einem relativen Winkel gedreht werden können, der größer als der vorher bestimmte relative Winkel (α) ist.

2. Radkralle nach Anspruch 1, bei der das Haltemittel von dem Krallenkörper abnehmbar ist.

3. Radkralle nach Anspruch 1 oder Anspruch 2, bei der das Haltemittel zumindest aus einem Wandglied (82, 84) besteht.

4. Radkralle nach Anspruch 3, bei der das besagte zumindest eine Wandglied (82, 84) mit dem anderen Arm (20) verbunden ist.

5. Radkralle nach Anspruch 3 oder Anspruch 4, bei der das besagte zumindest eine Wandglied (82, 84) eine Kante einer Abdeckplatte (60) umfasst, die mit dem anderen Arm (20) verbunden ist.

6. Radkralle nach Anspruch 5, bei der die Abdeckplatte (60) und der Krallenkörper (12) zusammen angepasst sind, um einen bedeutenden Teil des Rades, an dem die Radkralle (10) befestigt ist, zu verdunkeln.

7. Radkralle nach Anspruch 5 oder Anspruch 6, bei der die Abdeckplatte (60) ein erstes Teilstück besitzt, das hinter einem Teil des Krallenkörpers (12) in der zusammengesetzten Radkralle liegt, und ein zweites Teilstück, das nicht hinter einem Teil des Krallenkörpers in der zusammengesetzten Radkralle liegt, wobei zumindest ein Wandglied (82, 84) eine Kante dieses besagten ersten Teilstückes der Abdeckplatte ist.

8. Radkralle nach einem der Ansprüche 3-7, bei der zumindest eines der Wandglieder zwei Flächen (82, 84) besitzt, die in einem vorher bestimmten relativen Winkel (α) eingestellt sind.

9. Radkralle nach einem der Ansprüche 5-7, bei der die Abdeckplatte (60) mit dem anderen Arm (20) in einer Anzahl von mit Zwischenraum angeordneten Positionen verbunden werden kann.

10. Radkralle nach einem der Ansprüche 1-9, bei der der besagte andere Arm verschiebbar an dem Krallenkörper angebracht werden kann, mittels eines Kanalteilstückes, das von dem Krallenkörper getragen wird.

## Revendications

1. Sabot de Denver (10) possédant trois bras (14, 16, 20), chacun des bras comprenant une partie radiale (24, 32) et une partie axiale (26, 34), l'un des bras au moins comprenant une partie radiale retour (30, 36), deux des bras (14, 16) étant montés de façon à pouvoir pivoter sur un corps de sabot (12) et possédant une partie radiale réglable (24), l'autre des bras (20) pouvant être fixé au corps de sabot dans plusieurs positions prédéterminées, sur lequel des dispositifs de fixation (82, 84) sont fournis pour maintenir l'orientation angulaire relative desdits deux de ces bras (14, 16) à un angle relatif prédéterminé (α) en empêchant substantiellement le mouvement de pivotement desdits deux de ces bras, les dispositifs de fixation étant déplaçables par rapport au corps de sabot entre les conditions de fonctionnement et de non-fonctionnement, **caractérisé en ce que** lorsque le dispositif de fixation est dans sa position de non-fonctionnement il est possible de faire pivoter les bras à un angle relatif plus grand que l'angle relatif prédéterminé (α).

2. Sabot de Denver selon la revendication 1 sur lequel le dispositif de fixation est séparable du corps de sabot.

3. Sabot de Denver selon la revendication 1 ou la revendication 2 sur lequel le dispositif de fixation est au moins un élément de paroi (82, 84).

4. Sabot de Denver selon la revendication 3 sur lequel ledit au moins un élément de paroi (82, 84) est relié à l'autre des bras (20).

5. Sabot de Denver selon la revendication 3 ou la revendication 4 sur lequel ledit au moins un élément de paroi (82, 84) comporte un bord d'une plaque de couverture (60) relié à l'autre des bras (20).

6. Sabot de Denver selon la revendication 5 sur lequel la plaque de couverture (60) et le corps de sabot (12) sont adaptés ensemble pour cacher une partie importante d'une roue à laquelle le sabot de Denver (10) est fixé.

7. Sabot de Denver selon la revendication 5 ou la revendication 6 sur lequel ladite plaque de couverture (60) possède une première portion qui se trouve derrière une partie du corps de sabot (12) sur le sabot de Denver assemblé, et une seconde portion qui ne se trouve pas derrière une partie du corps de sabot sur le sabot de Denver assemblé, ledit au moins un élément de paroi (82, 84) étant un bord de ladite première portion de la plaque de couverture.

8. Sabot de Denver selon l'une quelconque des revendications 3-7 sur lequel ledit au moins un élément de paroi possède deux surfaces (82, 84) placées à l'angle relatif prédéterminé (α).

9. Sabot de Denver selon l'une quelconque des revendications 5-7 sur lequel la plaque de couverture (60) peut être reliée à l'autre des bras (20) dans plusieurs positions espacées.

10. Sabot de Denver selon l'une quelconque des revendications 1-9 sur lequel ledit autre bras est montable sur le corps de sabot de façon à pouvoir coulisser au moyen d'un profilé en U porté par le corps de sabot.
